# EUROPÄISCHE PATENTSCHRIFT

(11) **EP 2 619 975 B1**
(45) Veröffentlichungstag und Bekanntmachung des Hinweises auf die Patenterteilung: **28.03.2018**
(21) Anmeldenummer: 11746179.8
(22) Anmeldetag: 16.08.2011
(51) Int. Cl.: H04N 5/272, H04N 9/75, H04N 5/222

(54) **VERFAHREN ZUM UNTERSCHEIDEN VON HINTERGRUND UND VORDERGRUND EINER SZENERIE SOWIE VERFAHREN ZUM ERSETZEN EINES HINTERGRUNDES IN BILDERN EINER SZENERIE**
METHOD FOR DIFFERENTIATING BACKGROUND AND FOREGROUND OF A SETTING AND METHOD FOR REPLACING A BACKGROUND IN IMAGES OF A SETTING
PROCÉDÉ DE DISTINCTION ENTRE L'ARRIÈRE-PLAN ET LE PREMIER PLAN D'UNE SCÈNE ET PROCÉDÉ DE REMPLACEMENT D'UN ARRIÈRE-PLAN DANS LES IMAGES D'UNE SCÈNE

(30) Priorität: 20.09.2010 DE 102010046025
(43) Veröffentlichungstag der Anmeldung: 31.07.2013
(60) Teilanmeldung: 18156774.4
(73) Patentinhaber: Fraunhofer-Gesellschaft zur Förderung der angewandten Forschung, 80686 München (DE)
(72) Erfinder: VONOLFEN, Wolfgang, 53225 Bonn (DE); WOLLSIEFEN, Rainer, 53229 Bonn (DE)
(74) Vertreter: Pfenning, Meinig & Partner mbB
(86) Internationale Anmeldenummer: PCT/EP2011/004114
(87) Internationale Veröffentlichungsnummer: WO 2012/038009

(56) Entgegenhaltungen:
- EP-A1- 1 499 117
- WO-A1-01/06766
- DE-A1-102007 041 719
- US-B1- 6 490 006
- A. GRUNDHÖFER, O. BIMBER: "Dynamic bluescreens", ACM SIGGRAPH 2008 TALKS ON, SIGGRAPH '08, 1. Januar 2008 (2008-01-01), Seite 1, XP055013289, New York, New York, USA DOI: 10.1145/1401032.1401037 ISBN: 978-1-60-558343-3

## Beschreibung

Die vorliegende Erfindung betrifft ein Verfahren, um in durch eine elektronische Kamera aufgenommenen Bildern oder Filmen einer Szenerie Hintergrund und Vordergrund zu unterscheiden. Die Erfindung betrifft außerdem ein Verfahren zum Ersetzen des Hintergrundes in von einer Szenerie aufgenommenen Bildern oder Filmen unter Beibehaltung des Vordergrundes.

Zur Separation von durch eine Kamera aufgezeichneten Objekten oder Personen, die voreinander in einer realen Szene stehen und sich dadurch gegenseitig verdecken, existieren nach dem Stand der Technik verschiedene Verfahren. Das am weitesten verbreitete Verfahren ist hierbei das seit langem eingesetzte Chroma-Keying, bei dem der Hintergrund in der realen Szene eine eindeutige Farbe hat, die bei den Vordergrundobjekten nicht auftritt. Durch eine einfache Farbanalyse des aufgezeichneten Bildes kann dieser Hintergrund dann detektiert und vom Vordergrund separiert werden. Nachteilig bei diesem Verfahren ist, dass in der realen Szene der Hintergrund in einer eindeutigen Farbe vorliegen muss, was in vielen Situationen nicht realisierbar ist.

DE 2007 041719 A1 beschreibt ein Verfahren zur Erzeugung erweiterter Realität in einem Raum.

WO 01/06766 A1 beschreibt ein Verfahren zur Bilddatenverarbeitung, bei dem eine Trennung von einen Bildvordergrund darstellenden Objektdaten eines Bildsatzes von einem einen Bildhintergrund darstellenden Datensatz erfolgt.

US 6,490,006 B1 beschreibt ein Chroma Key System, das einen Hintergrund und einen Vordergrund mittels Farbe unterscheidet.

EP 1 499 117 A1 beschreibt ein Verfahren zum Keying von Vordergrund und Hintergrundbereichen eins Bildes oder Objektes in einem Bild.

A. Grundhöfer, O. Bimber: "Dynamic bluescreens", ACM SIGGRAPH 2008 TALKS ON, SIGGRAPH '08, 1. Januar 2008 (2008-01-01), Seite 1, New York, New York, USA beschreibt die Synchronisation von Kameras und analoger Belichtung mit Hochgeschwindigkeitsprojektoren.

Aufgabe der vorliegenden Erfindung ist es, ein Verfahren zum Unterscheiden von Hintergrund und Vordergrund in durch eine elektronische Kamera aufgenommenen Bildern oder Filmen einer Szenerie anzugeben, dass eine freie Gestaltbarkeit des Hintergrundes und des Vordergrundes erlaubt. Aufgabe ist es außerdem, ein Verfahren zum Ersetzen eines Hintergrundes in einem Bild oder Film einer Szenerie anzugeben, bei dem Hintergrund und Vordergrund frei gestaltbar sind.

Diese Aufgabe wird gelöst durch das Verfahren zum Unterscheiden von Hintergrund und Vordergrund in durch eine elektronische Kamera aufgenommenen Bildern einer Szenerie nach Anspruch 1, das Verfahren zum Ersetzen eines Hintergrundes in einem Bild einer Szenerie nach Anspruch 14 und das elektronische Anzeigesystem nach Anspruch 15. Die abhängigen Ansprüche geben vorteilhafte Weiterbildungen der erfindungsgemäßen Verfahren an.
Erfindungsgemäß wird ein Verfahren bereitgestellt, mittels dem in durch eine elektronische Kamera aufgenommenen Bildern einer Szenerie Hintergrund und Vordergrund voneinander unterscheidbar sind. Dabei wird als Hintergrund ein kameraferner Teil der Szenerie angesehen und als Vordergrund der Kameranahe Teil der Szenerie. Die Szene ist die Gesamtheit der Objekte des Hintergrundes und des Vordergrundes. Sofern hier von Bildern die Rede ist, können diese feste Bilder oder bevorzugt Frames eines Filmes sein. Dabei müssen weder Hintergrund noch Vordergrund das Bild voll ausfüllen und können auch nur in Teilen oder gar nicht im Bild erscheinen. Das erfindungsgemäße Verfahren ist auch auf Teilbereiche von Bildern anwendbar. So kann beispielsweise in Aufnahmen von Sportereignissen Bandenwerbung von davor stehenden Spielern unterschieden werden. Allgemein wird davon ausgegangen, dass der Vordergrund den Hintergrund aus Sicht der Kamera bereichsweise verdeckt.

Das erfindungsgemäße Verfahren kann sowohl in stehenden Bildern als auch in Filmen der Szenerie ausgeführt werden, die mit einer elektronischen Kamera, also beispielsweise einer Kamera mit einem CCD- oder CMOS-Bildsensor aufgenommen werden. Grundsätzlich ist das Verfahren auch basierend auf durch analoge elektrische Kameras aufgenommenen Bildsignalen ausführbar, die Umsetzung mit digitalen Kameras ist jedoch bevorzugt.

Erfindungsgemäß kann der Hintergrund eine beliebige Abbildung zeigen. Diese kann z.B. eine Abbildung mit mehreren Farben und/oder mehreren Helligkeitsstufen sein. Insbesondere wird vorzugsweise eine monochrome und einheitlich helle Fläche nicht als Abbildung im Sinne dieser Schrift verstanden.

Das Bild des Hintergrundes wird nun mit einer Kodierung gezeigt, die für einen direkten menschlichen Betrachter der Szenerie die Erkennbarkeit der Abbildung erhält oder sogar für einen solchen Betrachter der Szenerie vollständig unsichtbar ist. Dass die Abbildung mit der Kodierung für einen direkten Betrachter der Szenerie erkennbar ist, bedeutet, dass diese Erkennbarkeit zumindest gegeben ist, wenn der Betrachter die Szenerie vor Ort unmittelbar betrachtet und vom Hintergrund einen hinreichenden Abstand hat, indem er den Inhalt der Abbildung aber noch erkennen kann. Die Kodierung des Bildes kann also eine Strukturierung der Abbildung bzw. des Hintergrundes umfassen, sofern diese so fein ist, dass ein Betrachter bei hinreichendem Abstand die Abbildung erkennt, ohne dass die Strukturierung dabei störend wirkt oder wahrnehmbar ist.

Von der Szenerie mit dem Hintergrund und der Kodierung sowie einem vor dem Hintergrund befindlichen Vordergrund wird nun mittels einer elektronischen Kamera ein Bild oder Film aufgenommen. Dabei erzeugt ein Bildsensor der Kamera, welcher die Bilder der Szenerie aufnimmt, ein Signal. In diesem Signal wird nun anhand der Kodierung der Hintergrund vom Vordergrund unterschieden. Dabei wird ausgenutzt, dass der Hintergrund die Kodierung aufweist, der Vordergrund jedoch nicht.

Da die Unterscheidung des Hintergrundes vom Vordergrund in dem Signal jenes Bildsensors, welcher die Bilder bzw. den Film der Szenerie für eine anschließende Darstellung bzw. Weiterverbreitung oder Sendung aufnimmt, vorgenommen wird, kann das Verfahren mit einer Kamera mit nur einem, nämlich dem die Bilder aufnehmenden Bildsensor, durchgeführt werden, ohne dass mehrere Bildsensoren erforderlich sind. Vorzugsweise wird daher das Verfahren mit genau einem Bildsensor durchgeführt. Erfindungsgemäß ist daher auch nur das genau eine Bildsignal dieses einen Bildsensors erforderlich.

In einigen Ausführungsformen kann es zur Erkennung des Hintergrundes anhand der Kodierung erforderlich sein, das von der Kamera bzw. dem Bildsensor aufzunehmende Bild geeignet zu modifizieren. Es ist dann bevorzugt, wenn das aufgenommene Bild der Szenerie zur Speicherung, Weiterverarbeitung oder Weiterverbreitung so modifiziert wird, dass die Modifikation vor Aufnehmen des Bildes gerade rückgängig gemacht wird, so dass zumindest der Vordergrund im letztlich erzeugten Bild unverfälscht erscheint, so wie er in einem nicht modifizierten Bild erscheinen würde.

In einer vorteilhaften Ausgestaltung der Erfindung kann die Kodierung der Abbildung bzw. des Hintergrundes umfassen, dass der Hintergrund periodisch abwechselnd unterschiedliche Anteile der Abbildung zeigt, wobei die Anteile je einer Periode die vollständige Abbildung zusammensetzen. Die Periodendauer, d.h. die Zeit, innerhalb der alle Anteile der Abbildung einmal gezeigt werden, wird dabei so kurz gewählt, dass für einen direkten Betrachter der Szenerie selbst die vollständige Abbildung erkennbar ist. Es wird nun eine Belichtungszeit der Kamera mit der Anzeige der Anteile so synchronisiert, dass die Kamera stets nur einen Anteil der Abbildung aufnimmt, der so gewählt ist, dass er eine Unterscheidung des Vordergrundes vom Hintergrund mittels eines Keying-Verfahrens, vorzugsweise mittels farbbasiertem Keying, wie z.B. Chroma-Keying, erlaubt. Ist m die Anzahl der Anteile, in welche die Abbildung unterteilt wird, so ist, wenn die Kamera von jeder Periode gerade einen Anteil aufnimmt, vorteilhafterweise die Frequenz, mit der die Anteile beim Zeigen gewechselt werden, das m-fache der Belichtungsfrequenz der Kamera.

Beim Zeigen derartiger Anteile kann sich im Laufe zumindest ein die Darstellung der Abbildung beeinflussender Abbildungsparameter im Laufe einer Periode ändern. Unter einem Abbildungsparameter kann z.B. ein Wert oder eine Gruppe von Werten von Gewichtungsfaktoren bzw. Skalierungsfaktoren verstanden werden, die zur Steuerung der Farbkanäle, des Kontrasts, der Helligkeit und/oder der Sättigung einzelner Pixel, Gruppen von Pixeln (Muster) oder der kompletten Abbildung geeignet sind.

Zum Keying liefert der während der Belichtung der Kamera aufgenommene Anteil des Hintergrundes eine Maske, die eine Unterscheidung des Hintergrundes vom Vordergrund erlaubt. So kann beispielsweise der belichtete Anteil einen bestimmten Farbanteil der Abbildung des Hintergrundes verstärkt oder ausschließlich darstellen, wobei dieser Farbanteil vorzugsweise so gewählt wird, dass er im Vordergrund nicht oder nur schwach vorhanden ist. In diesem Fall kann der Vordergrund vom Hintergrund beispielsweise mittels farbbasiertem Keying, insbesondere Chroma-Keying, unterschieden werden.

Erfindungsgemäß soll in allen Ausführungsformen der Erfindung jedes Verfahren als Keying-Verfahren verstanden werden, das die Erstellung einer Maske ermöglicht, mittels derer der Hintergrund vom Vordergrund unterschieden werden kann. Allgemein beschreibt "keying" einen Prozess, Bestandteile in einem Bild oder Video zu erkennen. Die Bestandteile können dabei erkannt bzw. herausgefiltert werden (Bildanalyse) und eventuell durch andere Bildquellen ersetzt werden (Bildkomposition). In der Bildanalyse werden bestimmte Merkmale oder Kodierungen im Bild erkannt und daraus eine Maske generiert, welche den zu erkennenden Bildbestandteilen entspricht. Die Maske kann bei der Bildkomposition als Vorlage dienen. Die Berechnung der Maske aufgrund der Eigenschaft bzw. der Kodierung muss nicht notwendig vollständig sein und kann durch weitere Verfahren ergänzt werden. Hierunter fallen z.B. Bildanalyseverfahren wie den optischen Fluss, Bildsegmentierung nach Farbe, Kanten o.ä. oder Heuristken (d.h. Vorannahmen über die Objekte in der Szene). Insbesondere können Informationen aus einem Kameratracking abgeleitet werden, mit deren Hilfe der Blickwinkel der Kamera in der Szene bekannt ist so dass Ort und Größe des Hintergrundes oder auch des Vordergrundes im Bild vorbestimmt werden können.

Allgemein wird daher dem Hintergrund als Kodierung eine Eigenschaft hinzugefügt, die im Vordergrund nicht auftritt oder nur dergestalt schwächer auftritt, dass in einer auf dieser Eigenschaft basierenden Maske der Hintergrund vom Vordergrund unterscheidbar ist.

In der vorstehend beschriebenen Ausführungsform stellt der zur Belichtung herangezogene Anteil die zum Keying verwendete Maske zur Verfügung. Der oder die anderen Anteile einer Periode ergänzen das Bild zum für einen direkten Betrachter der Szenerie vollständigen Bild. Während des Zeigens dieser anderen Anteile belichtet die Kamera vorzugsweise nicht.

Beispielsweise kann der während der Belichtung gezeigte Anteil einen bestimmten Farbanteil der Abbildung verstärkt oder reduziert darstellen, so dass mittels dieses Farbanteils der Vordergrund vom Hintergrund unterschieden werden kann. Der belichtete Anteil zeigt dabei diesen Farbanteil dann erhöht, wenn der Vordergrund ihn erniedrigt zeigt, oder erniedrigt, wenn der Vordergrund ihn erhöht zeigt. Der oder die anderen Anteile, die der Hintergrund in einer Periode zeigt, können dann die ergänzenden Farbanteile entsprechend erniedrigt oder erhöht zeigen, so dass der unmittelbare Betrachter der Szenerie die eigentlichen Farben der Abbildung wahrnimmt.

In einer vorteilhaften Ausgestaltung der Erfindung kann die Abbildung des Hintergrundes in jeweils genau zwei Anteile aufgeteilt werden, die mit einer bestimmten Frequenz abwechselnd gezeigt werden. Die Kamera kann dann synchron mit der halben Frequenz des Wechsels aufzeichnen. Es werden also immer zwei Anteile der Abbildung während eines Taktes der Kamera gezeigt. Die Frequenz, mit der der gezeigte Anteil gewechselt wird, ist hier also doppelt so hoch wie die Belichtungsfrequenz der Kamera.

In einer anderen beispielhaften Realsierung der vorstehend beschriebenen Ausführungsform können die Farben in drei Bestandteile aufgeteilt werden und nur ein Drittel belichtet werden. Die Kamera belichtet also nur einen der drei Bestandteile. In diesem Fall würde die Frequenz, mit welcher der Anteil gewechselt wird, drei mal so hoch wie die Belichtungsfrequenz der Kamera gewählt.

Eine weitere Ausgestaltung des erfindungsgemäßen Verfahrens sieht vor, dass die Kodierung der Abbildung bzw. des Hintergrundes umfasst, dass der Hintergrund zeitlich abwechselnd Muster zeigt, die sich innerhalb einer Periode zur vollständigen Abbildung ergänzen. Anhand des periodisch abwechselnden Musters kann im Signal des Bildsensors der Hintergrund vom Vordergrund unterschieden werden.

In einer vorteilhaften Ausgestaltung der Erfindung kann im Signal des Bildsensors hierbei eine Mustererkennung, beispielsweise auf Basis einer Fourier-Transformation und/oder -Filterung, durchgeführt werden. Dadurch kann der Hintergrund anhand der Frequenz, mit der die Muster abwechselnd gezeigt werden, vom Vordergrund unterschieden werden. In einer Fourier-Transformation zeigen die Hintergrundbereiche hier einen Anteil der wechselnden Frequenz, den der Vordergrund nicht zeigt.

Das Muster, das der Hintergrund zeigt, kann vorteilhaft in einer Abtastrichtung des Bildsensors periodisch sein und kann insbesondere beispielsweise ein Schachbrettmuster sein. Die einzelnen Bereiche des Musters, also beispielsweise die Quadrate des Schachbrettmusters, können zwischen hell und dunkel wie auch zwischen verschiedenen Farbanteilen oszillieren.

Zur Erzeugung des oszillierenden Musters kann u.a. der Hintergrund selbstleuchtend sein, beispielsweise ein LED-Display, oder es kann auch vor der Abbildung des Hintergrundes ein ansteuerbarer Filter entsprechend dem Muster angeordnet sein, der periodisch abwechselnd unterschiedliche Teile des Bildes sperrt.

Im Falle eines Schachbrettmusters kann das oszillierende Muster abwechselnd in das Schachbrettmuster und das hierzu inverse Schachbrettmuster zeigen.

Bevorzugterweise ist das Muster binär, wird also zwischen genau zwei Zuständen umgeschaltet. Ein gegebener Bereich des Musters lässt in einem Zustand Licht der Abbildung vollständig durch oder leuchtet mit maximaler Helligkeit und schwächt im anderen Zustand das Licht der Abbildung ab oder leuchtet mit verminderter Helligkeit. Das Abschwächen kann auch ein vollständiges Abschwächen oder vollständige Dunkelheit sein.

In einer weiteren Ausgestaltung der Erfindung kann die Kodierung der Abbildung bzw. des Hintergrundes umfassen, dass die Abbildung in Form von Farbpunkten auf einem Untergrund gerastert dargestellt wird. Dabei setzen die Farbpunkte zusammen mit dem sie umgebenden Untergrund die Farbe der Abbildung am Ort des Farbpunktes zusammen. Es ist dabei auch möglich, dass der Untergrund der Abbildung schwarz ist, so dass die Farbe der Abbildung gerade durch die Farbe der Farbpunkte gegeben ist.

Es wird nun vor dem Bildsensor bzw. vor der Kamera ein Farbfilter angeordnet, der gerade die Farben der Farbpunkte abschwächt oder herausfiltert und gegebenenfalls die Farben des Hintergrundes ungeschwächt passieren lässt. Da in der Praxis der Hintergrund nicht vollständig schwarz ist, lässt der Farbfilter auch bei einem schwarzen Hintergrund jene Farben unabgeschwächt durch, die nicht die Farben der Farbpunkte sind.

Durch den Filter liegt in dem vom Bildsensor aufgenommenen Bild die Farbe des Untergrundes der Abbildung verstärkt gegenüber den Farben der Farbpunkte vor. Wird nun, wie in allen farbbasierten Ausführungsformen der Erfindung, für den Untergrund eine Farbe gewählt, die im Vordergrund nur schwach oder gar nicht vorhanden ist, so kann der Hintergrund vom Vordergrund mittels farbbasiertem Keying unterschieden werden. Es ist auch möglich, den Farbfilter so zu wählen, dass sich alle Farben der Szenerie mit Ausnahme jener der Farbpunkte aus den vom Farbfilter durchgelassenen Farben zusammensetzen lassen.

Um den Vordergrund im letztlich erzeugten Bild ohne farbliche Abweichung darzustellen, kann der Effekt des Farbfilters vor dem Bildsensor herausgerechnet werden.

In einer besonders bevorzugten Ausführungsform kann der Farbfilter vor dem Bildsensor ein Spektralfilter, insbesondere ein Interferenzfilter sein, der bestimmte Bereiche des sichtbaren Spektrums, die über den gesamten sichtbaren Bereich verteilt sind, herausfiltert. Es kann dann vor den Farbpunkten jeweils ein zum Filter vor der Kamera komplementärer Spektralfilter bzw. Interferenzfilter angeordnet sein, der seinerseits gleichmäßig über das sichtbare Spektrum verteilte Farben so durchlässt, dass sich aus diesen alle Farben darstellen lassen, die zur Darstellung der Abbildung erforderlich sind. Dass die Farbfilter der Farbpunkte und der Kamera komplementär sind, bedeutet hier, dass sie innerhalb des sichtbaren Bereiches unterschiedliche, sich im Wesentlichen nicht überlappende Bereiche des sichtbaren Spektrums durchlassen. Anstelle von Interferenzfiltern können auch beispielsweise Notchfilter eingesetzt werden.

Aufgrund der Farbpunkte stellt der Hintergrund die Abbildung gerastert dar. Die Auflösung des Rasters wird dabei vorzugsweise so gewählt, dass ein Betrachter der Szenerie ab einem bestimmten Abstand die Abbildung erkennt.

Die Farbpunkte des Hintergrundes können reflektierend oder selbstleuchtend ausgestaltet sein. Selbstleuchtende Farbpunkte können beispielsweise mittels Glühbirnen oder Leuchtdioden (LEDs) realisiert sein. Da Leuchtdioden mit sehr monochromem Licht realisiert werden können, ist es möglich, die Farbpunkte des Hintergrundes aus Leuchtdioden zusammenzusetzen und mittels eines Filters vor dem Bildsensor bzw. der Kamera, beispielsweise eines Interferenzfilters, gerade die von den Leuchtdioden ausgesandten Frequenzen herauszufiltern oder abzuschwächen. Werden von dem Filter vor der Kamera die nicht durch die Leuchtdioden ausgesandten Frequenzen unabgeschwächt durchgelassen, so kann aus diesen Farben der Untergrund der Abbildung sowie der Vordergrund dargestellt werden.

In einer weiteren Ausgestaltung der Erfindung kann die Kodierung der Abbildung umfassen, dass der Hintergrund nur Farben ausgewählt aus zumindest einem, vorzugsweise zumindest zwei voneinander im Spektrum beabstandeter Bereiche des sichtbaren Spektrums abstrahlt oder reflektiert. Vor dem Bildsensor bzw. der Kamera wird nun ein Farbfilter angeordnet, den das von der Szenerie ausgehende Licht vor dem Auftreffen auf den Bildsensor durchläuft. Dieser wird so gewählt, dass er jene Bereiche des sichtbaren Spektrums, aus denen die Farben der Abbildung ausgewählt sind, abschwächt, aber zwischen diesen Bereichen liegende Bereiche des sichtbaren Spektrums ungeschwächt durchlässt. Auf diese Weise liegt auf dem Bildsensor der Hintergrund abgeschwächt oder dunkel vor, während der Vordergrund aus jenen Farben zusammengesetzt erscheint, die vom Farbfilter durchgelassen werden. Werden die herausgefilterten Bereiche bzw. die durchgelassenen Bereiche des Spektrums geeignet gewählt, können hierdurch alle Farben des Vordergrundes dargestellt werden. Insbesondere kann auch die Wahl der durchgelassenen Bereiche auf jene im Vordergrund vorkommenden Farben angepasst werden.

Im vom Bildsensor aufgenommenen Bild wird nun der Vordergrund vom Hintergrund mittels Keying auf die abgeschwächten Bereiche unterschieden. Die Abschwächung erzeugt also in diesem Fall die Keying-Maske. Ist die Abschwächung durch den Filter vor dem Bildsensor nicht vollständig, so können, sofern notwendig, die abgeschwächten Bereiche, insbesondere der Vordergrund, zur Darstellung des endgültigen Bildes rechnerisch rekonstruiert werden.

Vorteilhafterweise kann die Kodierung des Hintergrundes in diesem Fall dadurch erreicht werden, dass ein entsprechender Farbfilter, also beispielsweise ein Interferenzfilter, vor dem Hintergrund und hinter dem Vordergrund, also zwischen Hintergrund und Vordergrund, angeordnet wird. Auf diese Weise durchläuft das vom Hintergrund ausgehende Licht diesen Farbfilter, so dass vom Hintergrund aus im Wesentlichen nur solches Licht auf den Farbfilter vor der Kamera trifft, das durch den Filter zwischen Hintergrund und Vordergrund herausgefiltert wird. Farbbestandteile, die vom Filter vor der Kamera nicht herausgefiltert bzw. abgeschwächt werden, gehen dabei also nur vom Vordergrund aus.

In einer weiteren möglichen Ausgestaltung der Erfindung kann die Kodierung des Hintergrunds umfassen, dass der Hintergrund elektromagnetische Strahlung zumindest eines nicht sichtbaren Spektralbereiches ausstrahlt. Es kann nun vor dem Bildsensor bzw. vor der Kamera eine Umwandlungsvorrichtung angeordnet sein. Diese kann flächig ausgestaltet sein, mit einer im Wesentlichen parallel zum Bildsensor und/oder parallel zur Lichteintrittsfläche der Kamera orientierten Fläche.

Die Umwandlungsvorrichtung weist nun einerseits Bereiche auf, an denen das sichtbare Licht die Vorrichtung ungehindert passieren kann. In anderen Bereichen weist die Vorrichtung Elemente auf, die eine Umwandlung der nicht sichtbaren Strahlung in sichtbares Licht bewirken und das umgewandelte Licht in den Strahlengang des vom Hintergrund ausgehenden Lichtes einfügen. Die Einfügung in den Strahlengang kann beispielsweise mittels einer oder mehrerer geeigneter Linsen erfolgen, die das Lichtumwandelnde Element so in den Strahlengang der Kameraoptik einfügen, dass es für die Kamera als Teil des Hintergrundes erscheint. Vorteilhafterweise ist jedem Licht-umwandelnden Element eine eigene derartige Linse zugeordnet.

Bevorzugterweise sind die umwandelnden Elemente auf der Fläche der Umwandlungsvorrichtung gerastert angeordnet. Sie liegen also auf dieser Fläche in äquidistanten Abständen vor. Zwischen den Umwandlungselementen kann das sichtbare Licht die Vorrichtung passieren.

Die unsichtbare elektromagnetische Strahlung kann UV-Strahlung oder Infrarot-Strahlung sein.

Die Umwandlungsvorrichtung erzeugt in dem vom Bildsensor aufgenommenen Bild eine Maske, mittels derer der Hintergrund über ein Keying-Verfahren vom Vordergrund, der die entsprechende unsichtbare Strahlung nicht oder in geringerem Maße aussendet, unterschieden wird. Vorteilhafterweise überführt die Umwandlungsvorrichtung das nicht sichtbare Licht in eine Farbe, die im Vordergrund nicht oder nur in geringerem Maße vorkommt.

Als Licht-umwandelnde Elemente kommen Punkte fluoreszierenden oder phosphoreszierenden Materials in Frage. Wiederum ist jedem der Punkte vorzugsweise eine Vorrichtung zur Integration des entsprechenden Punktes in den Hintergrund im Strahlengang der Kamera vorgesehen. Die Wandlung des Lichtes durch die fluoreszierenden oder phosphoreszierenden Materialien erzeugt hier ein nicht gerichtetes, sichtbares Licht einer bestimmten Farbe. Deshalb werden vorzugsweise nachgelagerte und im Filter integrierte Linsen eingesetzt, um dieses Streulicht entsprechend dem optischen Gang zu bündeln. Unterstützend können hier noch Barrieren im Filter verwendet werden, welche die Funktion der Linsen entsprechend ergänzen. Dabei können die Barrieren den Teil des Streulichts absorbieren oder reflektieren, welcher aufgrund seiner Richtung durch die Linsen nicht in den Strahlengang der Kamera gebündelt werden kann, weil es beispielsweise quer zum Strahlengang verläuft. Für Streulicht entgegen dem Strahlengang kann die Barriere halbspiegelnd sein (d.h. die eintreffende unsichtbare elektromagnetische Strahlung wird durchgelassen, das durch die Materialien umgewandelte Streulicht in umgekehrter Richtung wird dagegen reflektiert und damit wieder in den Strahlengang zurückgeworfen).

In einer weiteren möglichen Ausgestaltung der vorliegenden Erfindung kann die Kodierung der Abbildung umfassen, dass der Hintergrund bzw. die Abbildung polarisiertes Licht nur einer bestimmten Polarisationsrichtung oder Polarisationsdrehrichtung abstrahlt und/oder reflektiert. Hier kann lineare Polarisation oder zirkulare Polarisation ausgenutzt werden. Es wird nun vor der Kamera bzw. dem Bildsensor ein Farbfilter und ein Polarisationsfilter angeordnet, welchen das von der Szenerie ausgehende Licht durchläuft, bevor es auf den Bildsensor trifft. Bevorzugterweise ist dabei der Farbfilter vor dem Polarisationsfilter angeordnet, so dass also von der Szenerie ausgehendes Licht zunächst den Farbfilter und dann den Polarisationsfilter durchläuft, bevor es auf den Bildsensor trifft. Der Farbfilter kann bevorzugt eine Farbkomponente abschwächen oder anheben bzw. verstärken.

Der Polarisationsfilter vor dem Bildsensor ist dabei nun so ausgerichtet, dass er Licht jener Polarisation, die von der Abbildung abgestrahlt oder reflektiert wird, herausfiltert. Dadurch kann im durch den Bildsensor erzeugten Bild der Hintergrund vom Vordergrund mittels Keying auf die dunklen Bildanteile erfolgen, die keinen Farbstich des Farbfilters aufweisen. Die dunklen Bildanteile, die keinen Farbstich des Farbfilters aufweisen, dienen daher als Maske für das Keying.

Es sei darauf hingewiesen, dass der Farbfilter hier vorzugsweise die entsprechende Farbkomponente nur abschwächt, jedoch nicht vollständig herausfiltert. Auf diese Weise lassen sich jene schwarzen Bereiche, die dadurch entstehen, dass der Polarisationsfilter polarisiertes Licht des Hintergrundes herausfiltert, von eventuellen schwarzen Bereichen des Vordergrundes dadurch unterscheiden, dass letztere ein helleres Schwarz aufweisen, das den Farbstich des Farbfilters aufweist. Das aufgenommene Schwarz ist in natürlichen Szenen nicht vollständig dunkel sondern eher ein dunkles Grau. Auch die Objekte erhalten somit durch den Farbfilter einen nicht wahrnehmbaren, aber messbaren Farbton. Das durch den Polarisationsfilter reduzierte Licht ist hingegen unabhängig von der Farbe weitestgehend absorbiert.

In einer weiteren möglichen Ausgestaltung der vorliegenden Erfindung umfasst die Kodierung der Abbildung bzw. des Hintergrundes, dass der Hintergrund elektromagnetische Strahlung zumindest eines nicht sichtbaren Spektralbereichs, wie UV- oder Infrarot, ausstrahlt. Es wird nun vor dem Bildsensor eine Umwandlungsvorrichtung angeordnet, welche von der Szenerie ausgehendes Licht durchläuft, bevor es auf den Bildsensor trifft. Diese Umwandlungsvorrichtung wandelt die nicht sichtbare elektromagnetische Strahlung, die von der Szenerie ausgeht, in sichtbares Licht um und blendet diese aus Sicht des Bildsensors in die Szenerie ein.

Vorteilhafterweise weist die Umwandlungsvorrichtung einen Strahlteiler auf, den das Licht vor Auftreffen auf den Bildsensor durchläuft und der die nicht sichtbare Strahlung zumindest zum Teil auf einen Wandler umlenkt, der die nicht sichtbare Strahlung detektiert und ein entsprechendes Muster sichtbaren Lichts erzeugt, das gerade dem Hintergrund entspricht. Dieses sichtbare Licht kann beispielsweise über einen halbdurchlässigen Spiegel in den Strahlengang zum Bildsensor eingeblendet werden, so dass der Bildsensor die Szenerie durch den halbdurchlässigen Spiegel und den Strahlteiler hindurch sieht. Es wird also in dieser Ausführungsform über den Strahlteiler zunächst die nicht sichtbare Strahlung zumindest zum Teil aus dem Strahlengang abgelenkt und über den halbdurchlässigen Spiegel ein dem Hintergrund entsprechendes Bild eingeblendet.

Der Wandler kann einen Bildsensor sowie eine abbildende Optik aufweisen, über welche ein Bild des Hintergrunds aus der nicht sichtbaren Strahlung auf dem Bildsensor erzeugt wird. Die Umwandlungsvorrichtung kann die entsprechende sichtbare Strahlung dann beispielsweise mittels eines Bilddisplays erzeugen, dessen Bild wie beschrieben in den Strahlengang der Kamera eingeblendet wird. Das eingeblendete Bild des Displays bildet im vom Bildsensor der Kamera erzeugten Bild einen zusätzlichen Farbton oder ein Muster im Bereich des Hintergrundes. Das anschließende Keying erzeugt hieraus eine Maske mittels derer der Hintergrund vom Vordergrund unterschieden werden kann.

In allen Ausführungsformen bedeutet, dass ein Element vor der Kamera oder vor dem Bildsensor angeordnet sei, dass es zwischen dem Bildsensor und dem Vordergrund der Szenerie angeordnet ist. Es kann dabei vor der Kameraoptik, in der Kameraoptik oder zwischen der Kameraoptik und dem Bildsensor untergebracht sein. Dass ein Filter vor dem Hintergrund angeordnet sei, bedeutet, dass er zwischen der Abbildung bzw. dem Hintergrund einerseits und dem Vordergrund andererseits angeordnet ist.

In allen Ausführungsformen der Erfindung, wo periodisch wechselnde Anteile des Hintergrundes oder einer Abbildung des Hintergrundes gezeigt werden, ist die Wechselfrequenz bevorzugt größer als die maximal wahrnehmbare Wechselfrequenz von 25 Hz, oberhalb derer die wechselnd gezeigten Anteile für einen Betrachter als eine aus den Anteilen zusammengesetzte Abbildung wahrgenommen werden. Bevorzugt ist die Wechselfrequenz größer oder gleich 50 Hz.

Im Folgenden soll die Erfindung anhand einiger Figuren beispielhaft erläutert werden. Gleiche Bezugszeichen entsprechen dabei gleichen oder entsprechenden Merkmalen. Die in den Beispielen gezeigten Merkmale können auch unter den verschiedenen Beispielen kombiniert werden und unabhängig vom konkreten Beispiel realisiert sein.

### Es zeigt

- Figur 1: einen Aufbau zur Durchführung eines Verfahrens gemäß einer ersten Ausführungsform der vorliegenden Erfindung;
- Figur 2: einen Aufbau zur Durchführung eines Verfahrens gemäß einer zweiten Ausführungsform der vorliegenden Erfindung;
- Figur 3: einen Aufbau zur Durchführung eines Verfahrens gemäß einer dritten Ausführungsform der vorliegenden Erfindung;
- Figur 4: einen Aufbau zur Durchführung eines Verfahrens gemäß einer vierten Ausführungsform der vorliegenden Erfindung;
- Figur 5: einen Aufbau zur Durchführung eines Verfahrens gemäß einer fünften Ausführungsform der vorliegenden Erfindung;
- Figur 6: einen Aufbau zur Durchführung eines Verfahrens gemäß einer sechsten Ausführungsform der vorliegenden Erfindung;
- Figur 7: einen Aufbau zur Durchführung eines Verfahrens gemäß einer siebten Ausführungsform der vorliegenden Erfindung; und
- Figur 8: zwei Spektren zweier zueinander komplementärer Interferenzfilter als schematische Darstellung.

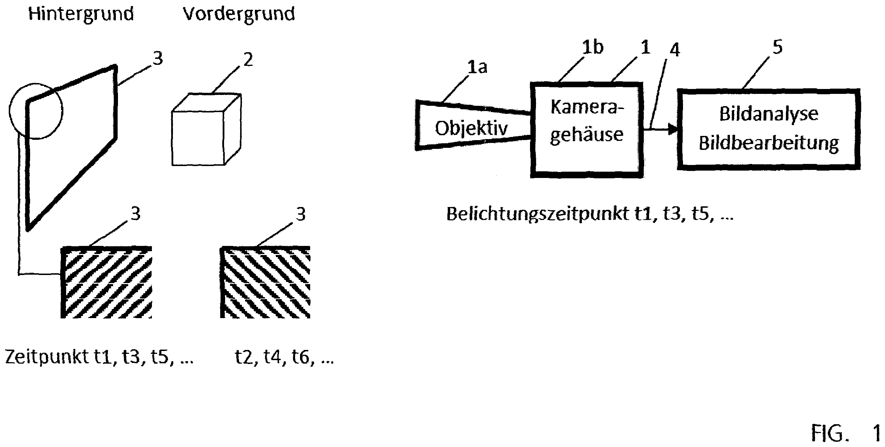

Figur 1 zeigt eine Einrichtung zur Durchführung des erfindungsgemäßen Verfahrens gemäß einer ersten Ausführungsform der Erfindung. Eine Szenerie mit einem Vordergrund 2 und einem Hintergrund 3 wird mittels einer Kamera 1 gefilmt. Die Kamera 1 weist einen nicht gezeigten Bildsensor auf, der ein Bildsignal 4 erzeugt, das einer Vorrichtung zur Bildanalyse und/oder Bildbearbeitung 5 zugeführt wird. Die Kamera 1 kann beispielsweise eine abbildende Optik 1a und ein Kameragehäuse 1b aufweisen, in welchem der Bildsensor angeordnet ist.

Der Vordergrund 2 ist im gezeigten Beispiel ein einfacher Würfel. In allen Ausführungsformen ist das erfindungsgemäße Verfahren jedoch mit beliebigen Vordergründen 2 durchführbar, insbesondere beispielsweise mit Sportlern eines Sportereignisses. Der Hintergrund 3 kann ebenfalls beliebig sein, soweit er eine Kodierung zulässt, wie sie zur Durchführung der Erfindung erforderlich ist. Beispielsweise kann der Hintergrund eine Studiokulisse oder eine Bandenwerbung in einem Stadion sein.

Im in Figur 1 gezeigten Beispiel zeigt der Hintergrund 3 eine Abbildung. Dabei werden periodisch abwechselnd unterschiedliche Anteile der Abbildung dargestellt, wobei die Anteile je einer Periode die vollständige Abbildung zusammensetzen. Die Anzeige der Anteile der Abbildung zu Zeiten t₁, t₂, t₃, ......, t₈, ...... wird nun so mit der Belichtung der Kamera synchronisiert, dass die Kamera in zumindest einer Periode, vorzugsweise in jeder Periode, nur einen bestimmten der Anteile t₁, t₃, t₅, ... aufnimmt, welcher so gewählt ist, dass er eine Unterscheidung von Vordergrund und Hintergrund im Bildsignal mittels Keying erlaubt. Das Keying kann beispielsweise farbbasiertes Keying, bevorzugt Chroma-Keying, sein. Die Analysevorrichtung 5 unterscheidet dann in den vom Bildsensor der Kamera 1 aufgenommenen Bildern 4 den Hintergrund vom Vordergrund.

Im gezeigten Beispiel kann das Bild des Hintergrundes beispielsweise in zwei Bilder aufgeteilt sein, wobei das erste Bild einen wählbar reduzierten Farbanteil aus dem Originalbild des Hintergrundes und das zweite Bild die ergänzenden Farben enthält, so dass in der Kombination der beiden Bilder das Originalbild entsteht. Beide Bilder können dann abwechselnd in einer so hohen Frequenz gezeigt werden, dass sie für einen Betrachter einzeln nicht mehr wahrnehmbar sind (z.B. 100 Hz). Die aufzeichnende Kamera 1 kann dann synchron mit der halben Frequenz (z.B. 50 Hz) arbeiten und mit verkürzter Belichtungszeit (z.B. 1/100 Sek.), so dass von ihr nur das erste der beiden Bilder mit dem gewählten Farbanteil aufgezeichnet wird. Das Verfahren lässt sich hier auch passiv mit einem reflektierenden Hintergrund realisieren. Hierzu kann vor dem Hintergrund ein ansteuerbarer LCD-Farbfilter angeordnet sein, der jeweils den entsprechenden Anteil der Abbildung durchlässt. Im aktiven Fall, in dem der Hintergrund selbstleuchtend ist (beispielsweise als LED-Display), kann der Hintergrund gezielt angesteuert werden, um entsprechend die Anteile der Abbildung zu zeigen.

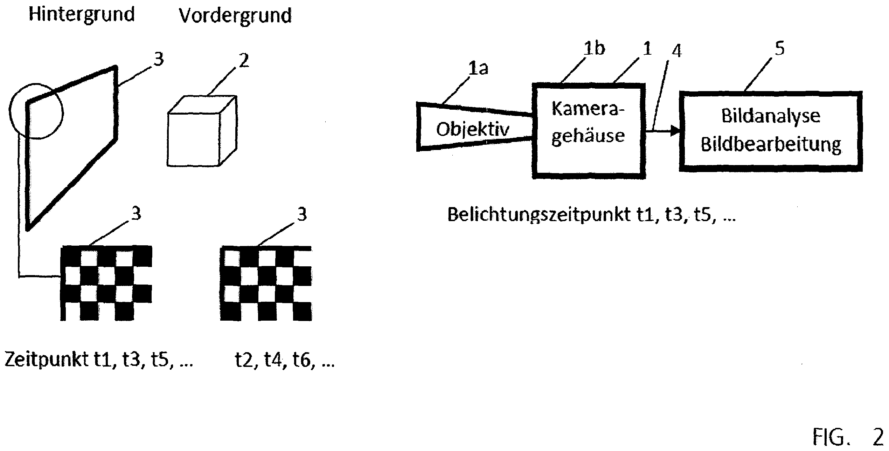

Figur 2 zeigt eine weitere vorteilhafte Einrichtung zur Durchführung des erfindungsgemäßen Verfahrens. Hierbei zeigt der Hintergrund zur Kodierung Muster periodisch abwechselnd, die sich innerhalb einer Periode zur vollständigen Abbildung ergänzen. Betrachtet man also alle Muster einer Periode zusammen, so ergibt sich die vollständige Abbildung.

Die Szenerie aus Hintergrund 3 und Vordergrund 2 wird von dem Bildsensor der Kamera 1 aufgenommen und das Bildsignal 4 mittels einer Analysevorrichtung 5 analysiert. Im durch den Bildsensor aufgenommenen Bild kann nun der Hintergrund 3 vom Vordergrund 2 anhand des periodisch wechselnden Musters unterschieden werden. Hierzu kann beispielsweise in dem Signal 4 des Bildsensors eine Fourier-Transformation durchgeführt werden und der Hintergrund 3 anhand der Frequenz des abwechselnden Zeigens der Muster vom Vordergrund 2 unterschieden werden. Der Bildsensor kann hierbei z.B. zeilenweise gescannt werden und die Analyse direkt in dem Scann-Signal durchgeführt werden. Das periodisch wechselnde Muster erzeugt in der Fourier-Transformation einen Frequenzanteil mit der Wechselfrequenz dort, wo der Hintergrund abgebildet wird.

Die Analyse kann sowohl über die Zeit mittels Analyse aufeinander folgender Bilder als auch innerhalb eines Bildes erfolgen. Es kann dadurch nach dem entsprechenden Muster in der Bildanalyse der Kamera 1 gesucht werden. Die Analyse kann durch Informationen aus einem Kameratracking unterstützt werden. Z.B. können Informationen aus dem Kameratracking bei der Bestimmung der Mustergröße helfen.

Verschiedene Muster sind möglich. Im gezeigten Fall zeigt der Hintergrund 3 ein Schachbrettmuster mit abwechselnd schwarzen Quadraten und Quadraten, die den Ausschnitt aus der Abbildung am Ort des entsprechenden Quadrates zeigen. Es wird abwechselnd das Schachbrettmuster und das hierzu komplementäre Schachbrettmuster gezeigt, bei welchem gegenüber dem eigentlichen Schachbrettmuster die schwarzen und die Abbildung zeigenden Quadrate ausgetauscht sind.

Die Frequenz der Oszillation ist so hoch gewählt, dass sie vom Betrachter nicht wahrgenommen werden kann (z.B. 50 Hz). Die Frequenz kann auch mit der Bildfrequenz der Kamera gekoppelt werden.

Das Muster des Hintergrundes kann passiv, beispielsweise durch einen ansteuerbaren Filter, wie einen LCD-Filter, erzeugt werden. Es kann auch aktiv als selbstleuchtender Hintergrund, beispielsweise als LED-Display, ausgestaltet sein.

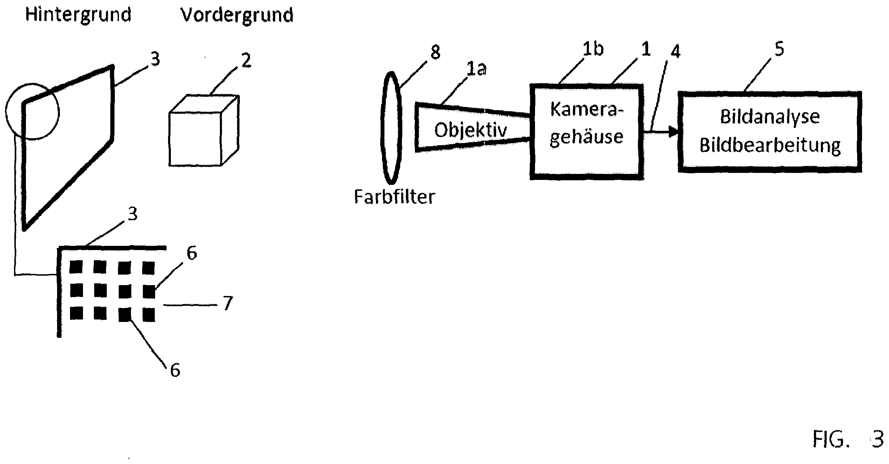

Figur 3 zeigt eine weitere mögliche Anordnung zur Durchführung eines Verfahrens, das zum Verständnis der Erfindung hilfreich ist. Zur Kodierung wird hier die Abbildung mittels Farbpunkten 6 auf einem Untergrund 7 dargestellt. Bevorzugt sind die Farbpunkte 6 auf dem Untergrund 7 gerastert angeordnet. Die Farbpunkte 6 stellen jeweils zusammen mit dem sie umgebenden Untergrund die Farbe der Abbildung am entsprechenden Ort dar. Der Untergrund kann auch schwarz sein, so dass der vollständige Beitrag zur Farbe der Abbildung von den Farbpunkten geliefert wird. Es ist nun vor dem Bildsensor der Kamera 1, bevorzugt vor dem Objektiv 1a der Kamera 1, ein Farbfilter 8 angeordnet, der gerade die von den Farbpunkten abgestrahlten Farben schwächt oder herausfiltert. Bevorzugterweise wird die Farbe des Untergrundes 7 des Hintergrundes 3 so gewählt, dass sie nicht oder nur in geringem Maße im Vordergrund 2 auftritt. Im durch den Bildsensor der Kamera 1 erzeugten Bildsignal 4 kann dann in der Analysevorrichtung 5 der Vordergrund 2 vom Hintergrund 3 mittels Keying auf die Farbe des Untergrundes 7 unterschieden werden. Der Untergrund 7 bildet hier also den zu analysierenden Farbton (oder ein Muster) für die Erzeugung eine Maske für das Keying.

Bevorzugterweise sind die Punkte so angeordnet, dass die Rasterung für einen unmittelbaren Betrachter in einem bestimmten Mindestabstand nicht als gerastert erscheint. Dieser Mindestabstand kann beispielsweise durch den üblichen Standort von Betrachtern in der Szenerie selbst gegeben sein, bei Bandenwerbung in einem Stadion beispielsweise durch den Abstand der nächstliegenden Sitze zur Bandenwerbung. Sind dann die Farbpunkte 6 gitterartig auf dem speziell gefärbten oder schwarzen Untergrund 7 mit kleinem Abstand zueinander angeordnet, ist für den Betrachter die eigentliche Abbildung sichtbar. Darüber hinaus sollte die Rasterung auch so eng gewählt werden, dass für die Kamera aus ihrer Position in einem bestimmten Mindestabstand die Rasterung nicht erkennbar ist. Sowohl für die Kamera wie auch für einen Betrachter in der Szenerie entsteht dann der gewünschte Farbeindruck ab einer entsprechenden Distanz zum Hintergrund.

Die Farbpunkte strahlen nun nur bestimmte Wellenlängen aus dem sichtbaren Bereich des Lichtes ab, die vom Farbfilter 8 vor dem Bildsensor gerade herausgefiltert werden, so dass auf dem Bildsensor im Wesentlichen nur die Farbe des Untergrundes übrig bleibt.

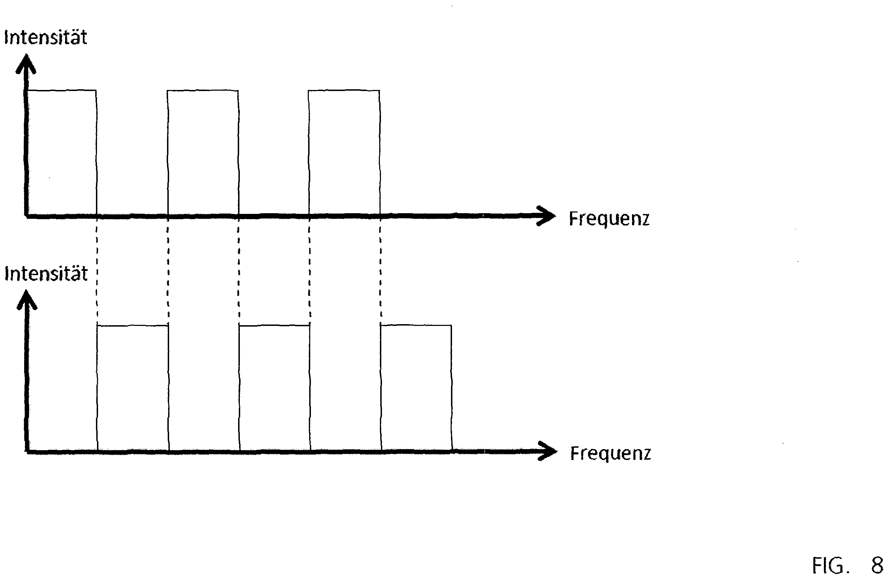

Besonders günstig lässt sich die in Figur 3 gezeigte Lösung mit Interferenzfiltern realisieren, auf die mit Bezug auf Figur 8 später noch im Detail eingegangen wird. Es wird hierbei vor jedem Farbpunkt 6 ein Interferenzfilter angeordnet, der nur einen Teil der Frequenzen des sichtbaren Spektrums passieren lässt. Der Teil weist dabei vorzugsweise mehrere voneinander beabstandete Bereiche auf, die so über das sichtbare Spektrum verteilt sind, dass sich die Farben der Abbildung daraus zusammensetzen lassen. Der Farbfilter 8 ist dann ein zu den Farbfiltern vor den Farbpunkten 6 komplementärer Interferenzfilter, der gerade jene Farben herausfiltert bzw. abschwächt, die von den Farbfiltern vor den Farbpunkten 6 unabgeschwächt durchgelassen werden. Die Farbpunkte 6 sind vorzugsweise selbstleuchtend, also beispielsweise Glühbirnen oder LEDs.

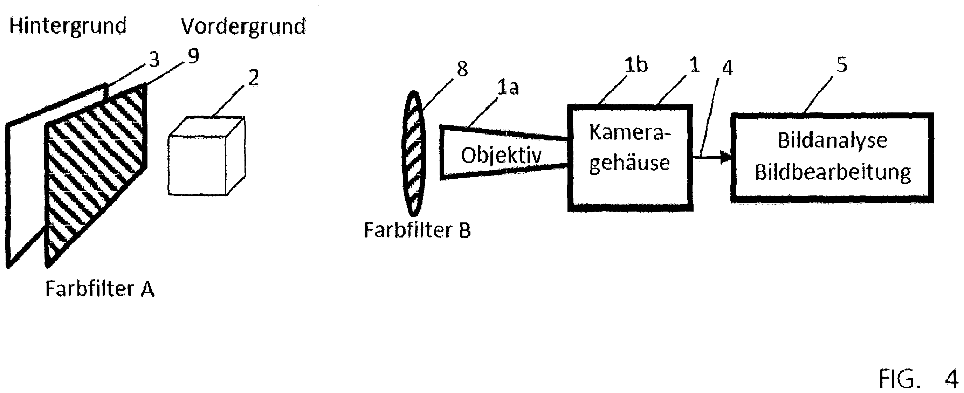

Figur 4 zeigt eine weitere mögliche Ausgestaltung zur Durchführung eines Verfahrens, das zum Verständnis der Erfindung hilfreich ist. Hierbei wird zwischen dem Hintergrund 3 und dem Vordergrund 2 ein Farbfilter 9 angeordnet, der nur Farben ausgewählt aus zumindest einem, vorzugsweise zwei voneinander im Spektrum beabstandeter Bereiche des sichtbaren Lichtes abstrahlt. Vor dem Bildsensor bzw. der Optik 1a der Kamera 1 ist dann ein weiterer Farbfilter 8 angeordnet, den von der Szenerie ausgehendes Licht auf dem Weg zum Bildsensor durchläuft. Dieser Farbfilter 8 filtert gerade jene Bereiche des Spektrums heraus oder schwächt sie ab, die vom Farbfilter 9 durchgelassen werden. Dadurch erscheint der Hintergrund auf dem Bildsensor abgeschwächt oder schwarz gegenüber dem Vordergrund 2, der insbesondere Licht solcher Frequenzbereiche abstrahlt, die vom Farbfilter 8 durchgelassen werden. Die dunklen Bereiche bilden daher im Bildsignal 4 des Bildsensors eine Maske, mit der Keying auf die dunklen Bereiche und damit auf den Hintergrund durchgeführt werden kann. Auf diese Weise kann die Bildanalysevorrichtung 5 den Hintergrund 3 vom Vordergrund 2 unterscheiden.

Auch in dieser Ausführungsform sind die Filter 8 und 9 vorzugsweise Interferenzfilter, die zueinander komplementär sind, also durchlässig für unterschiedliche, sich vorzugsweise nicht überschneidende, Bereiche des sichtbaren Spektrums sind.

Auf den Farbfilter 9 kann auch verzichtet werden, wenn der Hintergrund 3 von sich aus nur Licht bestimmter Frequenzbereiche abstrahlt, die vom Filter 8 herausgefiltert werden. Ein solcher selbstleuchtender Hintergrund lässt sich beispielsweise mit LEDs realisieren, die ein definiertes Spektrum abstrahlen. Der Farbfilter 8 ist dann so ausgelegt, dass er gerade die von den LEDs abgestrahlten Frequenzen abschwächt oder herausfiltert.

Der Filter 9 kann so gewählt werden, dass die von ihm durchgelassenen Farbbereiche des sichtbaren Spektrums ausreichen, um die im Hintergrund auftretenden Farben darzustellen. Entsprechend kann auch der Farbfilter 8 so gewählt werden, dass die von ihm durchgelassenen Frequenzen ausreichen, die im Vordergrund 2 vorkommenden Farben darzustellen. Auf diese Weise kann das vom Bildsensor erzeugte Bild ohne Korrektur weiter verwendet werden. Es ist jedoch stets auch eine Korrektur der Farben des Vordergrundes im vom Bildsensor aufgenommenen Bild möglich, das eventuelle Farbabweichungen aufgrund des Filters 8 korrigiert.

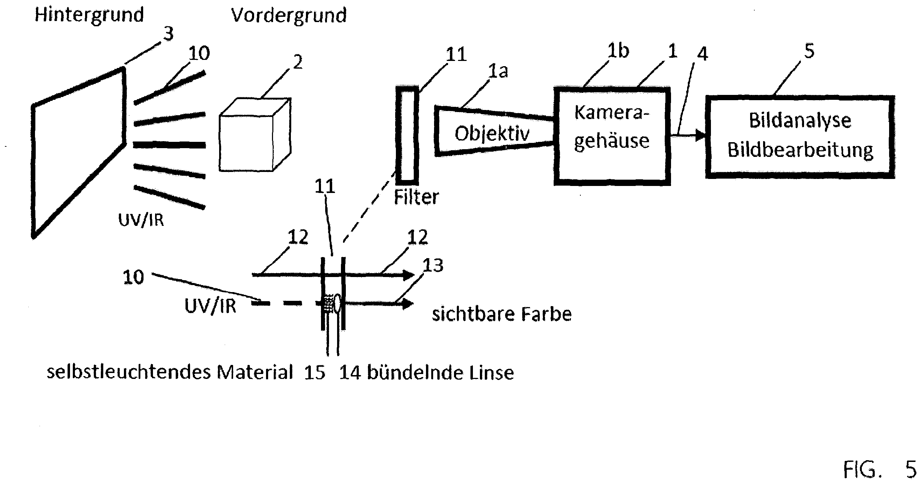

Figur 5 zeigt einen weiteren Aufbau zur Durchführung eines Verfahrens, das zum Verständnis der Erfindung hilfreich ist. Hier strahlt zur Kodierung der Hintergrund nicht sichtbare Strahlung 10 ab, die beispielsweise ultraviolette Strahlung oder Infrarot-Strahlung sein kann. Vor dem Bildsensor oder vor dem Objektiv 1a der Kamera 1 ist nun eine flächige Umwandlungsvorrichtung 11 angeordnet, die bereichsweise auf sie treffende Strahlung durchlässt und bereichsweise Elemente 15, die beispielsweise fluoreszierend oder phosphoreszierend sind, aufweist, durch welche die unsichtbare Strahlung 10 in sichtbares Licht 13 überführt wird. Die Elemente 15 können dabei gleichmäßig und insbesondere gerastert über eine Fläche der Vorrichtung 11 verteilt angeordnet sein, so dass in jedem Bereich einerseits sichtbares Licht 12 passieren kann und andererseits die unsichtbare Strahlung 10 in sichtbares Licht überführt werden kann. Alle auf den Bildsensor treffende Strahlung durchläuft die Vorrichtung 11. Auf dem Bildsensor wird daher zum einen das unverändert durch die Vorrichtung durchtretende Licht dargestellt und zum anderen das durch die Umwandlung der unsichtbaren Strahlung 10 entstehende Licht 13. Da die unsichtbare Strahlung 10 vom Hintergrund 3 ausgeht, nimmt der Bildsensor der Kamera 1 das Licht 13 gerade dort auf, wo der Hintergrund 3 abgebildet wird. Vorzugsweise wird die Farbe des durch die Vorrichtung 11 erzeugten Lichtes 13 so gewählt, dass sie von den im Vordergrund 2 vorkommenden Farben unterscheidbar ist. Es bildet dann das erzeugte Licht 13 eine Maske, mittels derer durch ein Keying-Verfahren der Hintergrund 3 vom Vordergrund 2 unterschieden werden kann.

Sofern die Elemente 15 zur Umwandlung der unsichtbaren Strahlung in sichtbares Licht 13 ungerichtetes Licht 13 abstrahlen, kann jedem der Elemente 15 eine Linse 14 zugeordnet sein, die so angeordnet ist, dass sie das umgewandelte Licht 13 aus Sicht des Bildsensors in dem Hintergrund 3 darstellt. Vorzugsweise kann auch für jedes Element eine Abschirmung vorgesehen sein, die Licht nur in Richtung des optischen Strahlenganges passieren lässt.

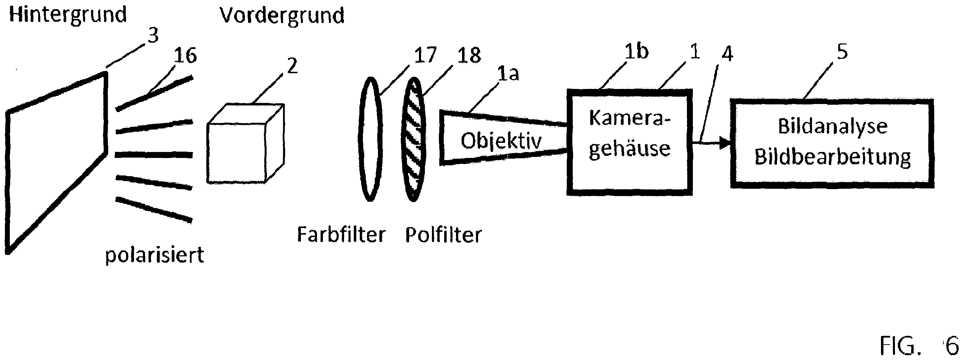

Figur 6 zeigt eine weitere mögliche Anordnung zur Durchführung eines Verfahrens, das zum Verständnis der Erfindung hilfreich ist. Hierbei strahlt der Hintergrund 3 polarisiertes Licht 16 einer bestimmten Polarisationsrichtung ab. Vor dem Bildsensor der Kamera 1 ist nun ein Farbfilter 17 sowie ein Polarisationsfilter 18 angeordnet, dessen Durchlassrichtung senkrecht zur Polarisationsrichtung des vom Hintergrund abgestrahlten Lichtes 16 steht. Bei Ausnutzung der zirkulären Polarisation wäre der Durchlassdrehsinn komplementär zur Polarisationsdrehung. Vorzugsweise durchläuft von der Szenerie ausgehendes Licht zunächst den Farbfilter 17 und dann den Polarisationsfilter 18, bevor es auf den Bildsensor trifft. Im vom Bildsensor aufgenommenen Bild erscheint der Hintergrund bei dieser Anordnung dunkel ohne Farbstich. Für direkte Betrachter der Szenerie dagegen erscheint der Hintergrund 3 in seinen normalen Farben, da diese das polarisierte Licht 16 wahrnehmen können. Ein Farbstich, den der Vordergrund 2 im vom Bildsensor der Kamera 1 erzeugten Bild aufgrund des Farbfilters 17 aufweist, kann anschließend im Bildsignal 4 rechnerisch kompensiert werden.

In dieser Ausgestaltung des Verfahrens bilden die dunklen Bildanteile ohne Farbstich, also jene vom Hintergrund 3 resultierenden Bildanteile, eine Maske, mittels derer Keying zur Unterscheidung des Hintergrunds 3 vom Vordergrund 2 durchgeführt werden kann.

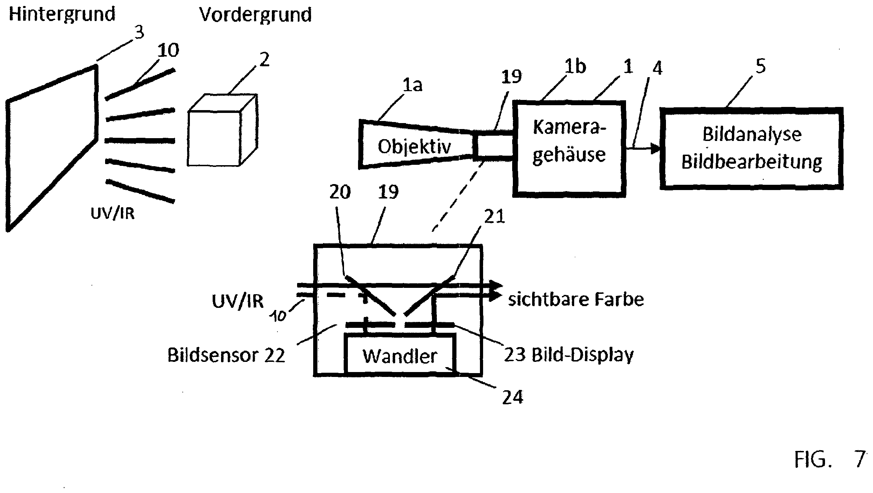

Figur 7 zeigt eine weitere Anordnung zur Durchführung eines Verfahrens, das zum Verständnis der Erfindung hilfreich ist. Hierbei strahlt der Hintergrund 3 unsichtbare Strahlung 10, beispielsweise ultraviolette Strahlung oder Infrarot-Strahlung, zusätzlich zur eigentlichen Abbildung ab. Vor dem Bildsensor, vorzugsweise in Richtung des Strahlengangs hinter der abbildenden Optik 1a der Kamera 1, ist in dieser Ausgestaltung eine Umwandlungsvorrichtung 19 angeordnet, mittels derer aus dem nicht sichtbaren Licht eine sichtbare Abbildung des Hintergrundes 3 erzeugbar ist. Die Vorrichtung 19 weist dabei einen Strahlteiler 20 und einen halbdurchlässigen Spiegel 21 auf, die im Strahlengang des von der Szenerie auf den Bildsensor treffenden Lichtes hintereinander angeordnet sind. Der Strahlteiler 20 lenkt das nicht sichtbare Licht zumindest teilweise auf einen Bildsensor 22 der Umwandlungsvorrichtung 19 ab. Ein Wandler 24 nimmt das vom Bildsensor 22 aus der unsichtbaren Strahlung 10 erzeugte Bild auf und erzeugt auf einem Bild-Display 23 ein Bild sichtbaren Lichtes, das mit dem vom Bildsensor aufgenommenen Bild übereinstimmt und daher gerade das Muster zeigt, das durch die unsichtbare Strahlung 10 vorgegeben wird. Das vom Bild-display erzeugte Bild wird dann mittels des halbdurchlässigen Spiegels 21 in den Strahlengang des von der Szenerie auf den Bildsensor der Kamera 1 treffenden Lichtes eingeblendet und dient im durch den Bildsensor der Kamera 1 erzeugten Bildsignal als Vorlage für die Erzeugung einer Keying-Maske, mittels derer der Vordergrund 2 vom Hintergrund 3 durch Keying unterschieden werden kann.

Figur 8 zeigt im oberen und unteren Teil Spektren zweier zueinander komplementärer Interferenzfilter in schematischer Darstellung. Auf der horizontalen Achse ist die Frequenz des Lichtes aufgetragen, die im gezeigten Beispiel im Wesentlichen den sichtbaren Bereich überspannen soll. Auf der vertikalen Achse ist die jeweilige Intensität aufgetragen, die Licht hat, das den entsprechenden Interferenzfilter passiert, wenn der Interferenzfilter mit weißem Licht bestrahlt wird, das alle Frequenzen des gezeigten Bereichs mit gleicher Intensität enthält. Es ist zu erkennen, dass die Interferenzfilter mehrere im Spektrum beabstandete Bereiche des sichtbares Lichtes passieren lassen. Die Bereiche des passierenden Lichtes können dabei in beiden Interferenzfiltern so gewählt sein, dass sich aus ihnen alle erforderlichen Farben des Hintergrundes 3 oder des Vordergrundes 2 zusammensetzen lassen. Die beiden gezeigten Interferenzfilter sind zueinander komplementär, was bedeutet, dass jene Bereiche des Spektrums, die durch den im oberen Teil gezeigten Interferenzfilter durchgelassen werden, vom im unteren Teil gezeigten Interferenzfilter gerade herausgefiltert werden, während jene Frequenzen, die vom oberen Interferenzfilter herausgefiltert werden, vom unteren Interferenzfilter gerade durchgelassen werden. Es sei darauf hingewiesen, dass die Filter die entsprechenden Farbanteile nicht vollständig herausfiltern müssen, um das erfindungsgemäße Verfahren zu ermöglichen. Auch eine Abschwächung ist hinreichend. Darüber hinaus ist es auch nicht erforderlich, dass die Frequenzbereiche so klar gegeneinander getrennt sind, wie dies in Figur 8 schematisch dargestellt ist. Ein gewisses Maß an Überlappung der von den verschiedenen Filtern durchgelassenen Bereiche ist zulässig.

## Patentansprüche

1. Verfahren zum Unterscheiden von Hintergrund (3) und Vordergrund (2) einer Szenerie in durch eine elektronische Kamera (1) aufgenommenen Bildern, wobei der Hintergrund (3) eine beliebige Abbildung mit einer Kodierung so kodiert zeigt, dass für einen unmittelbaren Betrachter des Hintergrundes (2) die Abbildung erkennbar ist,
und wobei der Hintergrund in einem von einem die Bilder aufnehmenden Bildsensor der Kamera erzeugten Signal mittels der Kodierung vom nicht kodierten Vordergrund unterschieden wird,
**dadurch gekennzeichnet, dass**
die Kodierung umfasst, dass der Hintergrund (3) periodisch abwechselnd unterschiedliche Anteile der Abbildung zeigt, wobei die Anteile je einer Periode die vollständige Abbildung zusammensetzen, und
dass die Anzeige der Anteile so mit einer Belichtung der Kamera (1) synchronisiert ist, dass die Kamera (1) in zumindest einer Periode nur einen der Anteile aufnimmt.

2. Verfahren nach dem vorhergehenden Anspruch, wobei die Kodierung umfasst, dass der Hintergrund (3) die Abbildung als periodische Abfolge von die Abbildung zusammensetzenden Anteilen zeigt, wobei sich zumindest ein die Darstellung der Abbildung beeinflussender Abbildungsparameter im Verlaufe je einer Periode verändert, und eine Belichtung des Bildsensors der Kamera (1) synchron mit dem Zeigen eines bestimmten Anteils erfolgt.

3. Verfahren nach dem vorhergehenden Anspruch, wobei eine zeitliche Mittelung der kodierten Abbildung über mindestens eine Periode der Abbildung entspricht.

4. Verfahren nach einem der beiden vorhergehenden Ansprüche, wobei eine Periodendauer eines Aufnahmezyklus des Bildsensors kleiner oder gleich einer Periodendauer der periodischen Abfolge des Zeigens der Anteile ist.

5. Verfahren nach einem der vorhergehenden Ansprüche wobei der von der Kamera (1) aufgenommene Anteil so gewählt ist, dass er eine Unterscheidung des Vordergrundes (2) vom Hintergrund (3) mittels Keying, vorzugsweise mittels Chroma-Keying, erlaubt,
und dass in den von dem Bildsensor aufgenommenen Bildern der Hintergrund (3) mittels Keying, vorzugsweise mittels Chroma-Keying, von dem Vordergrund (2) unterschieden wird.

6. Verfahren nach dem vorhergehenden Anspruch, wobei der von dem Bildsensor aufgenommene Anteil einer Periode einen im Vordergrund (2) im Wesentlichen nicht auftretenden Farbanteil erhöht darstellt und die anderen Anteile diesen Farbanteil entsprechend so vermindert darstellen, dass die Anteile zusammen die Farben der Abbildung zusammensetzen.

7. Verfahren nach einem der vorhergehenden Ansprüche,
wobei zwei Anteile mit einer Frequenz wechselnd gezeigt werden, die doppelt so hoch ist, wie eine Belichtungsfrequenz der Kamera.

8. Verfahren nach einem der vorhergehenden Ansprüche, **dadurch gekennzeichnet, dass** die Kodierung der Abbildung umfasst, dass der Hintergrund (3) periodisch abwechselnd Muster zeigt, die sich innerhalb einer Periode zur vollständigen Abbildung ergänzen und dass der Hintergrund (3) in dem Signal des Bildsensors anhand des periodisch abwechselnden Musters vom Vordergrund (2) unterschieden wird.

9. Verfahren nach dem vorhergehenden Anspruch, wobei eine Belichtungsfrequenz des Bildsensors und das Zeigen des Musters miteinander synchronisiert sind und/oder dass in dem Signal des Bildsensors eine Fourier-Transformation durchgeführt wird und der Hintergrund (3) anhand der Frequenz des abwechselnden Zeigens der Muster vom Vordergrund (2) unterschieden wird.

10. Verfahren nach einem der beiden vorhergehenden Ansprüche, wobei das Muster in einer mathematisch unterscheidbaren Struktur besteht, vorzugsweise in einer Abtastrichtung des Bildsensors periodisch ist, wobei das Muster vorzugsweise ein Schachbrettmuster ist.

11. Verfahren nach einem der Ansprüche 8 bis 10, wobei jedes der Muster einer Periode ein binäres Muster ist, das bereichsweise vollständig lichtdurchlässig oder selbstleuchtend ist und bereichsweise weniger lichtdurchlässig oder weniger durchlässig für Licht einer Farbe oder undurchlässig für das entsprechende Licht ist oder schwächer oder gar nicht in der entsprechenden Farbe leuchtet.

12. Verfahren nach einem der vorhergehenden Ansprüche, wobei die Kodierung der Abbildung eine Oszillation über die Bildfolge umfasst, und die Oszillation bei der Unterscheidung des Vordergrundes vom Hintergrund berücksichtigt wird.

13. Verfahren nach einem der vorhergehenden Ansprüche, wobei die Abbildung mit Hilfe von Kameratracking im Bild des Bildsensors lokalisiert wird und/oder das Kameratracking die Unterscheidung von Hintergrund (3) und Vordergrund (2) unterstützt.

14. Verfahren zum Ersetzen eines Hintergrundes (3) in einem Bild einer Szenerie, wobei mittels eines Verfahrens nach einem der vorhergehenden Ansprüche der Hintergrund (3) von einem Vordergrund (2) unterschieden wird und der Hintergrund (3) durch einen anderen Hintergrund ersetzt wird.

15. Elektronisches Anzeigesystem mit zumindest einer Anzeige sowie zumindest einer Kamera (1), wobei die Kamera eingerichtet ist zum Aufnehmen von Bildern und wobei das elektronische Anzeigesystem Mittel umfasst, um ein Verfahren nach einem der vorhergehenden Ansprüche auszuführen.

## Claims

1. Method for differentiating between background (3) and foreground (2) of a scenery in images recorded by an electronic camera (1),
wherein the background (3) shows an arbitrary image coded with a coding such that the image is recognisable for a direct observer of the background (2),
and wherein the background is differentiated from the non-coded foreground in a signal produced by an image sensor, recording the images, of the camera by means of the coding,
**characterised in that**
the coding comprises that the background (3) shows periodically alternating different components of the image, wherein the components of respectively one period compose the complete image, and
**in that** the display of the components is synchronised with an exposure of the camera (1) such that the camera (1) records only one of the components in at least one period.

2. Method according to the preceding claim, wherein the coding comprises that the background (3) shows the image as a periodic sequence of components composing the image, wherein at least one imaging parameter which influences the display of the image changes in the course of respectively one period, and an exposure of the image sensor of the camera (1) is effected synchronously with the showing of a specific component.

3. Method according to the preceding claim, wherein a temporal averaging of the coded image over at least one period corresponds to the image.

4. Method according to one of the two preceding claims,
wherein a period duration of a recording cycle of the image sensor is less than or equal to a period duration of the periodic sequence of the showing of the components.

5. Method according to one of the preceding claims, wherein the component recorded by the camera (1) is chosen such that it allows a differentiation of the foreground (2) from the background (3) by means of keying, preferably by means of chroma-keying,
and that the background (3) is differentiated from the foreground (2) in the images recorded by the image sensor by means of keying, preferably by means of chroma-keying.

6. Method according to the preceding claim, wherein the component of a period recorded by the image sensor displays increased a colour component substantially not occurring in the foreground (2) and the other components display this colour component correspondingly reduced such that the components together compose the colours of the image.

7. Method according to one of the preceding claims, wherein two components are shown alternating with a frequency which is twice as high as an exposure frequency of the camera.

8. Method according to one of the preceding claims, **characterised in that** the coding of the image comprises that the background (3) shows periodically alternating patterns which complement each other within one period to form the complete image and that the background (3) is differentiated from the foreground (2) in the signal of the image sensor by means of the periodically alternating pattern.

9. Method according to the preceding claim, wherein an exposure frequency of the image sensor and the showing of the pattern are synchronised with each other and/or that a Fourier transform is performed in the signal of the image sensor and the background (3) is differentiated from the foreground (2) by means of the frequency of the alternating showing of the patterns.

10. Method according to one of the preceding claims, wherein the pattern exists in a mathematically distinguishable structure, preferably is periodic in a scanning direction of the image sensor, wherein the pattern is preferably a chequerboard pattern.

11. Method according to one of claims 8 to 10,
wherein each of the patterns of a period is a binary pattern which is completely light-permeable or self-illuminating in regions and is less light-permeable or less permeable for light of one colour in regions or impermeable for the corresponding light or illuminating more weakly or not at all in the corresponding colour.

12. Method according to one of the preceding claims, wherein the coding of the image comprises an oscillation over the image sequence, and the oscillation is taken into account in the differentiation of the foreground from the background.

13. Method according to one of the preceding claims, wherein the image is located in the image of the image sensor with the help of camera tracking and/or the camera tracking assists the differentiation of the background (3) and foreground (2).

14. Method for replacing a background (3) in an image of a scenery, wherein the background (3) is differentiated from a foreground (2) by means of a method according to one of the preceding claims and the background (3) is replaced by a different background.

15. Electronic display system having at least one display and also at least one camera (1), wherein the camera is configured to record images and wherein the electronic display system comprises means to carry out a method according to one of the preceding claims.

## Revendications

1. Procédé pour la différenciation d'un arrière-plan (3) et d'un avant-plan (2) d'une scène dans des images prises par une caméra électronique (1), l'arrière-plan (3) montrant de manière codée une représentation quelconque avec un codage, de façon à ce que la représentation soit reconnaissable pour un observateur direct de l'arrière-plan (2), et l'arrière-plan étant différencié de l'avant-plan non codé dans un signal généré par un capteur d'image de la caméra prenant les images au moyen du codage,
**caractérisé en ce que**
le codage implique que l'arrière-plan (3) montre périodiquement et en alternance différentes parties de la représentation, les parties de chaque période composant l'ensemble de la représentation et
l'affichage des parties est synchronisé avec un éclairage de la caméra (1) de façon à ce que la caméra (1) prenne seulement une des parties pendant au moins une période.

2. Procédé selon la revendication précédente, le codage impliquant que l'arrière-plan (3) montre la représentation en tant que série périodique de parties composant la représentation, au moins un paramètre de représentation influençant l'affichage de la représentation variant au cours de chaque période et un éclairage du capteur d'image de la caméra (1) ayant lieu de manière synchrone avec la représentation d'une partie déterminée.

3. Procédé selon la revendication précédente, une moyenne en fonction du temps correspondant à la représentation codée sur au moins une période de la représentation.

4. Procédé selon l'une des deux revendications précédentes, une période d'un cycle de prise de vue du capteur d'image étant inférieure ou égale à une période de la série périodique d'affichage des parties.

5. Procédé selon l'une des revendications précédentes, la partie prise par la caméra (1) étant choisie de façon à ce qu'elle permette une différenciation de l'avant-plan (2) et de l'arrière-plan (3) au moyen d'un keying, de préférence d'un Chroma-Keying,
et ce que, dans les images prises par le capteur d'image, l'arrière-plan (3) est différencié de l'avant-plan (2) de préférence au moyen d'un Chroma-Keying.

6. Procédé selon la revendication précédente, la partie d'une période prise par le capteur d'image représentant, de manière augmentée une partie de couleur n'apparaissant globalement pas dans l'avant-plan (2) et les autres parties représentant cette partie de couleur de manière diminuée de façon à ce que les parties composent ensemble les couleurs de la représentation.

7. Procédé selon la revendication précédente, deux parties étant représentées en alternance avec une fréquence qui est le double d'une fréquence d'éclairage de la caméra.

8. Procédé selon l'une des revendications précédentes, **caractérisé en ce que** le codage de la représentation implique que l'arrière-plan (3) montre périodiquement et en alternance des motifs qui se complètent à l'intérieur d'une période pour la représentation complète et **en ce que** l'arrière-plan (3) est différencié, dans le signal, de l'avant-plan (2), à l'aide du motif alternant de manière périodique.

9. Procédé selon la revendication précédente, une fréquence d'éclairage du capteur d'image et l'affichage du motif étant synchronisés entre eux et/ou en ce que, dans le signal du capteur d'image, une transformation de Fourier est effectuée et l'arrière-plan (3) est différencié de l'avant-plan (2) à l'aide de la fréquence de l'affichage alterné des motifs.

10. Procédé selon l'une des deux revendications précédentes, le motif consiste en une structure mathématique différenciable, de préférence qui est périodique dans une direction de balayage du capteur d'image, le motif étant de préférence un motif en échiquier.

11. Procédé selon l'une des revendications 8 à 10, chacun des motifs d'une période étant un motif binaire qui est par endroits entièrement transparent ou luminescent et par endroits moins transparent ou moins transparent à la lumière d'une couleur ou opaque pour la lumière correspondante ou s'allume plus faiblement ou pas du tout dans la couleur correspondante.

12. Procédé selon l'une des revendications précédentes, le codage de la représentation comprenant une oscillation sur la série d'images, et l'oscillation étant prise en compte lors de la différenciation entre l'avant-plan et l'arrière-plan.

13. Procédé selon l'une des revendications précédentes, la représentation étant localisée à l'aide d'une poursuite de la caméra dans l'image du capteur d'image et/ou la poursuite de la caméra favorisant la différenciation entre l'arrière-plan (3) et l'avant-plan (2).

14. Procédé de remplacement d'un arrière-plan (3) dans une image d'une scène, moyennant quoi, au moyen d'un procédé selon l'une des revendications précédentes, l'arrière-plan (3) est différencié d'un avant-plan (2) et l'arrière-plan (3) est remplacé par un autre arrière-plan.

15. Système d'affichage électronique avec au moins un affichage ainsi qu'au moins une caméra (1), la caméra étant conçue pour la prise d'images et le système d'affichage électronique comprenant des moyens permettant d'exécuter un procédé selon l'une des revendications précédentes.
